# EUROPÄISCHE PATENTSCHRIFT

(11) **EP 2 017 097 B1**
(45) Veröffentlichungstag und Bekanntmachung des Hinweises auf die Patenterteilung: **25.07.2012**
(21) Anmeldenummer: 08011159.4
(22) Anmeldetag: 19.06.2008
(51) Int. Cl.: B60D 1/54, B60D 1/06

(54) **Anhängekupplung für Kraftfahrzeuge**
Towbar for motor vehicles
Attelage pour véhicules automobiles

(30) Priorität: 21.06.2007 DE 102007029051
(43) Veröffentlichungstag der Anmeldung: 21.01.2009
(73) Patentinhaber: WESTFALIA - Automotive GmbH, 33378 Rheda-Wiedenbrück (DE)
(72) Erfinder: Söffge, Friedhelm, 71229 Leonberg (DE)
(74) Vertreter: Kohlmann, Kai

(56) Entgegenhaltungen:
- EP-A- 1 533 149
- EP-A- 1 557 299
- EP-A1- 1 504 928
- WO-A-2005/110781

## Beschreibung

Die Erfindung betrifft eine Anhängekupplung für Kraftfahrzeuge umfassend eine fahrzeugfest angeordnete schwenkbar gelagerte Kugelstange, die an ihrem freien. Ende eine Kupplungskugel trägt und zumindest in ihrer Betriebslage, vorzugsweise jedoch sowohl in ihrer Betriebslage als auch ihrer Ruhelage, über in Eingriff bringbare Formschlusskonturen eines Kugelstangenlagerkopfes und andererseits eines diesem gegenüberliegenden Bauteiles drehfest festlegbar ist, wobei der Kugelstangenlagerkopf und das diesem gegenüberliegende Bauteil den Gelenkkopf und die Gelenkpfanne eines Kugelgelenkes bilden und zwischen Gelenkkopf und Gelenkpfanne eine Bahnsteuerung des Kugelstangenlagerkopfes angeordnet ist, die beim Schwenken der Kugelstange von der Betriebslage in die Ruhelage eine Veränderung der Lage der Schwenkachse bewirkt, wobei an dem Gelenkkopf des Kugelgelenks ein Hohlbauteil ansetzt, dessen Höhlung sich bis in den Gelenkkopf des Kugelgelenks erstreckt.

Aus der EP 1 533 149 A1 ist eine deratige Anhängekupplung bekannt. Die Formschlussverbindung besteht insbesondere aus Kugeln und diesen gegenüberliegend zugeordneten Kalotten. Der Kugelstangenlagerkopf ist in seiner Freigabestellung als dreiachsig schwenkbares Gelenk mit einer Bahnsteuerung des Kugelstangenlagerkopfes ausgebildet, um die Schwenkbewegung der Anhängekupplung in einfacher Weise an die unterschiedlichsten Raumverhältnisse bei unterschiedlichen Kraftfahrzeugen anzupassen. Diese Anpassung ist bei herkömmlichen, um eine einzige Achse schwenkbaren Anhängekupplungen nicht bei jedem Fahrzeug möglich. Konstruktiv ist das dreiachsige Gelenk als Kugelkopf ausgestaltet, der mit einem halbschalenartigen, den Kugelkopf umgebenden Gehäuse des Kugelstangenlagerkopfes ein Kugelgelenk bildet. Der Kugelkopf selbst ist auf einer Hohlwelle angeordnet, in die die Verriegelung zum in Eingriffbringen der Kugeln in die Kalotten sowohl in der Arbeitsstellung als auch in der Ruhelage integriert ist. Als Verriegelung dient ein in der Hohlwelle geführter, von Außen betätigbarer Sperrbolzen und mit diesem in Radialbohrungen zusammenwirkende Rastmittel. Die Rastmittel sind von dem Sperrbolzen in den Radialbohrungen nach außen drückbare Kugeln, die in eine umlaufende Nut in dem Kugelstangenlagerkopf eingreifen und dabei die drehfeste Festlegung des Kugelstangenlagerkopfes mittels der Formschlusskonturen bewirken. Die die Taumelbewegung bewirkende Bahnsteuerung ist in Form einer Kulisse ausgebildet. In diese Kulisse greifen Stifte ein, die in einem mit dem Kugelstangenlagerkopf verbundenen Haltering angeordnet sind. Durch Gestaltung der Form der Kulisse kann die Schwenkbewegung des Kugelstangenlagerkopfes des Kugelgelenks weitgehend frei bestimmt werden. Zum Entsperren der in den Endlagen festgelegten Kugelstange, muss der Sperrbolzen die Rastmittel freigeben, so dass die Formschlussverbindung gelöst wird.

Ein Nachteil der Anhängekupplung nach der EP 1 533 149 A1 besteht darin, dass neben den Formschlusskonturen zusätzlich ein- und ausrückbare Rastmittel vorgesehen sind, um die Formschlusskonturen in den Drehendlagen in Eingriff zu bringen.

Ausgehend von diesem Stand der Technik liegt der Erfindung die Aufgabe zugrunde, eine gattungsgemäße Anhängekupplung für Kraftfahrzeuge konstruktiv zu vereinfachen und die Handhabung der Anhängekupplung zu verbessern, wobei stets ein einwandfreies Verschwenken der Kugelstange nach Entriegelung möglich ist.

Diese Aufgabe wird bei einer Anhängekupplung der eingangs erwähnten Art dadurch gelöst, dass in der Höhlung eine axial unmittelbar auf die Formschlusskonturen wirkende Verriegelung zum in Eingriff bringen der Formschlusskonturen angeordnet ist und in der Gelenkpfanne Mittel zum außer Eingriff bringen der Formschlusskonturen angeordnet sind.

Die unmittelbar auf die Formschlusskonturen wirkende Verriegelung macht die zusätzlich ein- und ausrückbaren Rastmittel und die umlaufende Nut entbehrlich, um die Formschlusskonturen zumindest in der Betriebslage, vorzugsweise jedoch in beiden Drehendlagen in Eingriff zu bringen.

Die verdrehsichere Fixierung des Kugelstangenlagerkopfes in der Betriebslage oder sowohl in der Ruhelage als auch der Betriebslage erfolgt ausschließlich über das in Eingriffbringen der Formschlusskonturen.

Um in der Freigabeposition der Verriegelung sicherzustellen, dass die Formschlusskonturen unabhängig von ihrer Einbaulage stets sicher freigegeben werden, ist gemäß der Erfindung vorgesehen, dass in der Gelenkpfanne Mittel zum außer Eingriffbringen der Formschlusskonturen angeordnet sind.

Darüber hinaus ist die Bahnsteuerung zwischen Gelenkkopf und Gelenkpfanne vorgesehen, die beim Schwenken der Kugelstange von der einen in die andere Endlage eine Veränderung der Lage der Schwenkachse bewirkt und damit zu dem vorteilhaften taumelnden, raum- und platzsparenden Verschwenken der Kugelstange in ihre jeweiligen Drehendlagen führt.

Mit Hilfe der Bahnsteuerung lassen sich beim Verschwenken, sei es motorisch oder von Hand, variable Schwenkbewegungen der Kugelstange realisieren, insbesondere um die Kugelstange mit dem geringst möglichen Bewegungsraum in eine unsichtbare Ruhestellung verschwenken zu können. Die durch die Bahnsteuerung bestimmte Schwenkkinematik ermöglicht in weiten Grenzen eine Anpassung an die unterschiedlichen Lagen und Geometrien der Ruhestellungsräume unterschiedlicher Kraftfahrzeuge, an denen eine erfindungsgemäße Anhängekupplung angebracht wird.

Das Gelenk ist als Kugelgelenk ausgestaltet, bei dem ein Gelenkkopf eine kugelähnliche Form aufweist, den die Gelenkpfanne vorzugsweise unverlierbar umgibt.

In einer ersten Ausgestaltung der Erfindung umgreift der zu Montagezwecken vorzugsweise mehrteilige Kugelstangenlagerkopf als Gelenkpfanne das diesem gegenüberliegende, fahrzeugfeste Bauteil, das den Gelenkkopf des Kugelgelenkes bildet. Diese Ausgestaltung der gelenkigen Verbindung hat den Vorteil, dass sich die Verriegelung zum in Eingriffbringen der Formschlusskonturen besonders einfach integrieren lässt, in dem an dem Gelenkkopf des Kugelgelenks eine vorzugsweise einstückig mit dem Gelenkkopf ausgebildete Hohlwelle ansetzt, deren Höhlung sich bis in den Gelenkkopf des Kugelgelenks erstreckt, wobei in der Höhlung die axial wirkende Verriegelung zum in Eingriffbringen der Formschlusskonturen in der Betriebslage, vorzugsweise jedoch in den beiden Drehendlagen angeordnet ist. In der Ruhelage kann die Kugelstange alternativ auch mittels eines Klemm- oder Arretiermechanismus festgelegt werden. Während der durch die Bahnsteuerung geführten Schwenkbewegung sind die Formschlusskonturen außer Eingriff. Die axial wirkende Verriegelung zum Lösen der Formschlusskonturen ist in dem fahrzeugfest angeordneten Bauteil angeordnet, so dass sich die Betätigungsmittel für die Verriegelung nicht an einem beweglich gelagerten Teil befinden.

Selbstverständlich ist es jedoch in kinematischer Umkehr der vorstehend beschriebenen Lösung möglich, dass der Kugelstangenlagerkopf den kugeligen Gelenkkopf und das diesem gegenüberliegende, am Fahrzeug befestigte Bauteil die Gelenkpfanne des Kugelgelenks bilden. Auch in diesem Fall ist das die Gelenkpfanne bildende Bauteil vorzugsweise mehrteilig ausgebildet, um den Kugelstangenlagerkopf unproblematisch montieren zu können. Bei dieser Ausführung der Erfindung setzt an dem Gelenkkopf des Kugelgelenks eine Kugelstange mit einer Höhlung an, die sich bis in den Gelenkkopf des Kugelgelenks erstreckt, wobei in der Höhlung eine axial wirkende Verriegelung zum in Eingriffbringen der Formschlusskonturen zumindest in der Betriebslage angeordnet ist.

Die axial wirkende Verriegelung umfasst vorzugsweise einen in der Höhlung geführten Sperrbolzen und mit diesem in Kalotten ein- und ausrückbare Kugeln. Jede Kalotte ist in der Gelenkpfanne angeordnet. Grundsätzlich genügen für die drehfeste Festlegung der beiden Gelenkteile in der Betriebslage eine einzige Kalotte und eine hierein eingreifende Kugel als Formschlusskonturen. Vorzugsweise sind jedoch jeder Drehendlage mehrere Kalotten und diesen zugeordnete, in radialen Durchgängen geführte Kugeln zugeordnet. Die Kugeln befinden sich in vorzugsweise radial verlaufenden Durchgängen des Gelenkkopfes, die sich zwischen der Höhlung und dem Außenmantel des Gelenkkopfes erstrecken. Durch die Formgebung des Sperrbolzens lassen sich die Kugeln in jedem Durchgang durch axiales Verschieben des Sperrbolzens in dem Durchgang hin- und herbewegen und dadurch in die Kalotten der Gelenkpfanne ein- bzw. ausrücken. Der Sperrbolzen kann beispielsweise im Querschnitt kreiszylindrische bzw. leicht konische, jedoch selbsthemmende Abschnitte unterschiedlicher Durchmesser mit konisch ausgebildetem Übergang zwischen den Abschnitten aufweisen, um die Kugeln in den Durchgängen zu bewegen.

Sofern die Formschlusskonturen durch mindestens eine mit einer Kalotte zusammenwirkende Kugel gebildet werden, umfassen die Mittel zum außer Eingriffbringen der Formschlusskonturen vorzugsweise einen federbelasteten Stift, der in der Kalottenfläche austritt und in Richtung der Längsachse des radialen Durchgangs in dem Gelenkkopf auf die Kugel wirkt. Sind mehrere derartige Formschlusskonturen angebracht, sind vorzugsweise sämtliche Formschlusskonturen mit derartigen, federbelasteten Stiften ausgerüstet.

Zum taumelnden, raum- und platzsparenden Verschwenken der Kugelstange in ihre Drehendlagen wird erfindungsgemäß vorgeschlagen, dass die Bahnsteuerung als Kulisse mit mindestens einem in die Kulisse eingreifenden Folgemittel ausgebildet ist. Die Kulisse ist insbesondere als Radialnut in dem Gelenkkopf mit auf der einen Gelenkkopfhälfte zu der anderen Gelenkkopfhälfte entgegen gerichtetem Verlauf ausgebildet. Als Folgemittel kommen beispielsweise Stifte, oder Bolzen in Betracht. Zur Reduzierung der Reibung und damit des Schwenkwiderstandes ist jedes Folgemittel vorzugsweise eine in einem Sackloch der Gelenkpfanne angeordnete Kugel, die in Richtung der im Querschnitt kreisabschnittsförmigen Radialnut federbelastet ist.

Die Kulisse, insbesondere die Nutbahn weist in einer Ausgestaltung der Erfindung zwei Anschläge für die Folgemittel auf, die eine Weiterbewegung des Kugelstangenlagerkopfes nach Erreichen der Betriebs- bzw. Ruhelage der Kugelstange unterbinden. Die beiden stirnseitigen Enden der Nut können beispielsweise als Anschläge für die Folgemittel dienen. Alternativ ist die Nutbahn umlaufend ausgebildet und die Schwenkbewegung in den Drehendlagen der Anhängekupplung der Kugelstange wird durch fahrzeugfeste Anschläge begrenzt.

Um einer verschleißbedingten Spielbildung zwischen dem Kugelstangenlagerkopf und dem diesen gegenüberliegenden Bauteil vorzubeugen, sind die Kugeln der Formschlusskonturen exzentrisch in die Kalotten in Eingriff bringbar. In Folge dessen ergibt sich in den Endlagen der Kugelstange eine Verspannung zwischen Gelenkkopf und Gelenkpfanne, die Relativbewegungen im Gelenk und damit einen Verschleiß zwischen Kugelstangenlagerkopf und dem gegenüberliegendem Bauteil entgegenwirkt.

Weitere Merkmale und Einzelheiten der Erfindung ergeben sich aus den Ansprüchen und der nachfolgenden Beschreibung des in der Zeichnung dargestellten Ausführungsbeispiels der Erfindung.

Es zeigen
- **Figur 1**: eine Aufsicht auf eine erfindungsgemäße Anhängekupplung in Arbeitsstellung, teilweise geschnitten,
- **Figur 2**: ein Teilschnitt längs der Linie A-A nach Figur 1 sowie
- **Figur 3**: einen Teilschnitt längs der Linie B-B nach Figur 1, wobei die Längsachse des Gelenkkopfes sowie der Hohlwelle in die Schnittebene gedreht sind.

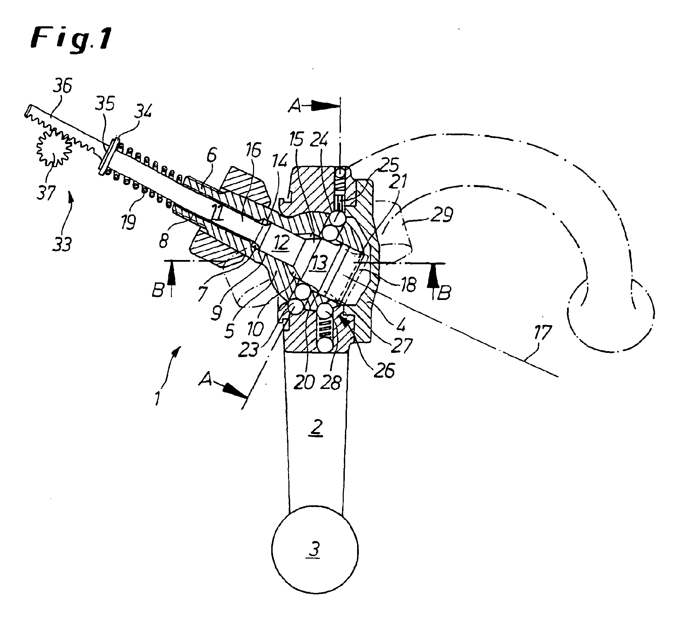

Die Anhängekupplung (1) umfasst eine schwenkbar gelagerte Kugelstange (2), die an ihrem freien Ende eine Kupplungskugel (3) trägt und sowohl in ihrer in Figur 1 gestrichelt dargestellten Ruhelage als auch in der in durchgezogenen Linien dargestellten Betriebslage über in und außer Eingriff bringbare Formschlusskonturen eines Kugelstangenlagerkopfes (4) und andererseits eines diesem gegenüberliegenden Bauteils (5) drehfest festlegbar ist.

Der die Kugelstange (2) haltende Kugelstangenlagerkopf (4) bildet die Gelenkpfanne eines Kugelgelenks, die formschlüssig und unverlierbar das gegenüberliegende, kugelförmige den Gelenkkopf bildende Bauteil (5) umgreift. Das den Gelenkkopf bildende Bauteil (5) ist an dem Fahrzeug, beispielsweise einem zur Befestigung der Anhängekupplung an dem Fahrzeug angebrachten Querträger befestigt, der der Übersichtlichkeit halber in Figur 1 nicht dargestellt ist.

An dem Bauteil (5) ist einstückig eine Hohlwelle (6) angeformt, deren Höhlung (7) sich bis in den Gelenkkopf erstreckt, wobei sich der Durchmesser der Höhlung in drei zylindrischen bzw. geringfügig konisch ausgebildeten Abschnitten (8, 9, 10) erweitert und die Übergänge zwischen den Abschnitten (8, 9, 10) konisch ausgebildet sind. In der derart gestuften Höhlung ist eine axial wirkende Verriegelung in Form eines Sperrbolzens (16) hin- und her beweglich geführt, wobei der Sperrbolzen (16) mit der Höhlung korrespondierende zylindrische bzw. geringfügig konische Abschnitte (11, 12, 13) mit unterschiedlichen Durchmessern aufweist, die über konische Abschnitte (14, 15) als Übergänge untereinander verbunden sind. Die Länge der Abschnitte des gestuft ausgeführten Sperrbolzens (16) und der gestuft ausgebildeten Höhlung (7) sowie die Neigungswinkel der zwischen den Abschnitten angeordneten konischen Übergänge sind aufeinander abgestimmt, so dass der Bewegungsweg des Sperrbolzens durch die zur Anlage gelangenden Oberflächen der konischen, die Übergänge bildenden Abschnitte von Sperrbolzen (16) und Höhlung (7) einerseits und das stirnseitige Ende (18) der Höhlung (7) andererseits begrenzt wird.

Der in der Höhlung (7) geführte Sperrbolzen (16) ist gegen die Kraft einer Druckfeder (19) mit Hilfe eines insgesamt mit (33) bezeichneten Betätigungsorgans aus der in Figur 1 in durchgezogenen Linien dargestellten Verriegelungsstellung (20) für die Formschlusskonturen in eine gestrichelt dargestellte Freigabestellung (21) bewegbar. Die Druckfeder (19) stützt sich einerseits an der nach außen weisenden Stirnseite der Hohlwelle (6) und andererseits an einer Stützscheibe (34) ab, die an einem über die Hohlwelle (6) hinausragenden Teil des zylindrischen Abschnitt (11) des Sperrbolzens (16) mit einem in einer umlaufenden Nut geführten Sicherungsring (35) in an dem Sperrbolzen festgelegt ist. Alternativ könnte die Feder (19) auch stirnseitig an dem Abschnitt (13) des Sperrbolzens anliegen. Aufgrund des dort zur Verfügung stehenden Bauraums kommt dann jedoch vorzugsweise eine konische Druckfeder zum Einsatz, bei der sich die spiraligen Windungen unter Druckbeanspruchung ineinander legen und sich die axiale Blocklänge reduziert. Hierdurch wird eine kurze Baulänge für den stirnseitigen Raum zur Aufnahme der Druckfeder ermöglicht.

Das Betätigungsorgan (33) wird im dargestellten Ausführungsbeispiel von einem sich an den Sperrbolzen (16) anschließenden Zahnstangenantrieb gebildet, dessen Zahnstange (36) mit dem Sperrbolzen (16) verbunden und mit diesem einstückig ausgeführt sein kann. Das in die Zahnstange (36) eingreifende Zahnrad (37) kann beispielsweise mit einem Handgriff, einem Hebel oder einem motorischen Antrieb verbunden sein.

In der Verriegelungsstellung (20) drückt der den größten Durchmesser aufweisende, zumindest teilweise leicht konisch ausgebildete Abschnitt (13) des Sperrbolzens (16) die in sechs radial verlaufenden Durchgängen (22) angeordneten Kugeln (23) in Kalotten (24), wodurch der Kugelstangenlagerkopf (4) gegenüber dem Bauteil (5) drehfest festgelegt wird. Die leicht konische Ausbildung des Abschnitts (13) gleicht ein insbesondere verschleißbedingtes Spiel in den Formschlusskonturen (23,24) aus. Die Konizität des Abschnitts (13) wird so bestimmt, dass eine Selbsthemmung des Sperrbolzens (16) auch bei großen statischen und dynamischen Kräften, die von den Kugeln (23) auf den Abschnitt (13) übertragen werden, gewährleistet ist. Diese Selbsthemmung ist bei Winkeln von bis zu 3 ° gegenüber der Längsachse (17) auch bei dynamischen Lasten gewährleistet. Für rein statische Belastungen kann der Winkel bis zu 9 ° betragen. Insbesondere wenn der Winkel größer als 3 ° ist, sollte der unmittelbar an den den Übergang bildenden Abschnitt (15) angrenzende Teil des Abschnitts (13) zylindrisch ausgebildet sein, um bei dynamischen Belastungsspitzen die Selbsthemmung sicherzustellen.

Wird nun der Sperrbolzen (16) aus der Verriegelungsstellung (20) in die Freigabestellung (21) mittels des Betätigungsorgans (33) gegen die Kraft der Druckfeder (19) verschoben, kommt die Formschlussverbindung frei, in dem sich die Kugeln (23) in den radialen Durchgängen (22) in Richtung des Sperrbolzens (16) bewegen, wobei jeweils die unmittelbar an dem Sperrbolzen (16) anliegende untere Kugel (23) von dem geringfügig konischen Abschnitt (13) des Sperrbolzens (16) über den den Übergang bildenden konischen Abschnitt (15) auf den zylindrischen Abschnitt (12) mit geringerem Durchmesser gelangt, der sich nunmehr teilweise in der Höhlung (10) mit größerem Durchmesser befindet. Der durch diese Verschiebung frei gegebene Ringraum zwischen dem zylindrischen Abschnitt (12) und der Höhlung (10) erlaubt es, dass sich die Kugeln (23) in den radialen Durchgängen (22) in Richtung des Sperrbolzens (16), das heißt zum Zentrum der Höhlung bewegen und damit die Formschlusskonturen freigeben.

Um unabhängig von etwaigen Reibungskräften der Kugeln (23) in den radialen Durchgängen (22), beispielsweise durch eindringende Verschmutzung oder in Folge von Korrosion stets eine einwandfreie Freigabe der Formschlusskonturen zu gewährleisten, sind in dem Kugelstangenlagerkopf (4) federbelastete Stifte (25) angeordnet, die im Zentrum der Kalottenfläche austreten und in Richtung der radialen Durchgänge (22) auf die Kugeln (23) einwirken. Diese federbelasteten Stifte (25) sind zwingend an den radialen Durchgängen (22) anzuordnen, in denen die Kugeln (23) in Folge der Schwerkraft in die Kalotten (24) fallen. Werden indes ausschließlich radiale Durchgänge in der in Einbaulage nach oben weisenden Halbkugel des Bauteils (5) angeordnet, kann grundsätzlich auf die federbelasteten Stifte verzichtet werden.

Zur Steuerung der Schwenkbewegung der Kugelstange (2) von der Arbeitsstellung in die Ruhestellung ist eine Bahnsteuerung (26) vorgesehen, die die Rotationsbewegung des Kugelstangenlagerkopfes (4) um das gegenüberliegende Bauteil (5) des Kugelgelenks steuert. In dem dargestellten Ausführungsbeispiel ist die Bahnsteuerung (26) als umlaufende Radialnut (27) in dem Bauteil (5) ausgebildet, in das ein Folgemittel in Form einer federbelasteten Kugel (28) eingreift. Die federbelastete Kugel (28) ist in einem Sackloch des die Gelenkpfanne bildenden Kugelstangenlagerkopfes (4) geführt und ragt etwa zur Hälfte über die Oberfläche der Gelenkpfanne hinaus und mit diesem Teil in die Radialnut (27) hinein.

Die Schwenkbewegung zwischen der Arbeits- und Ruhestellung der Kugelstange (2) wird im vorliegenden Ausführungsbeispiel dadurch begrenzt, dass an dem fahrzeugfesten Bauteil (5) Anschläge vorgesehen sind, an denen der Kugelstangenlagerkopf in seinen Endlagen zur Anlage gelangt.

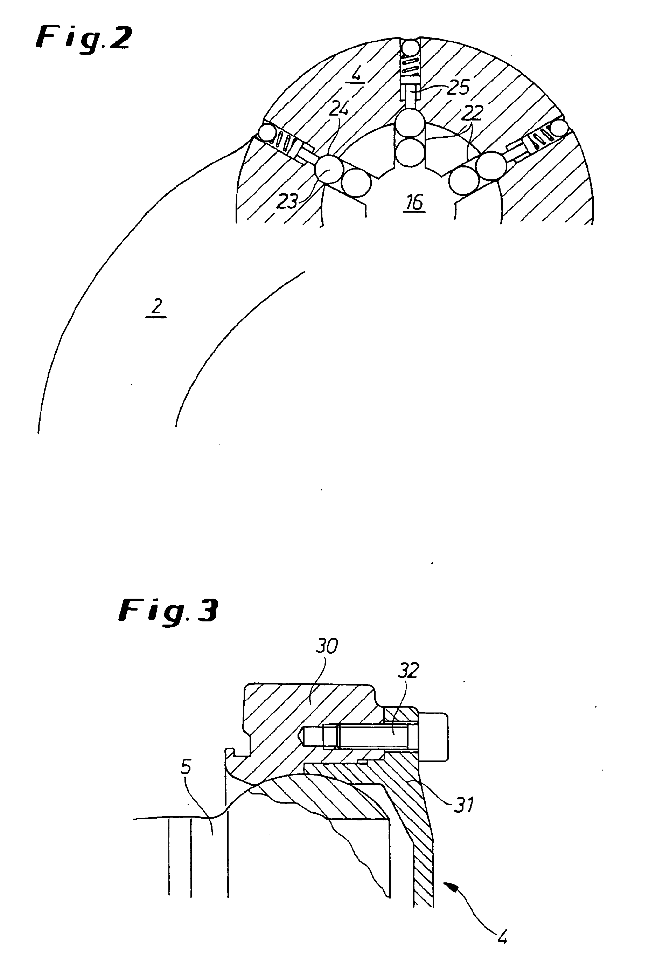

Zur Montage des den Gelenkkopf umgreifenden Kugelstangenlagerkopfes (4) ist dieser zweiteilig ausgeführt, wie dies in Figur 3 dargestellt ist. Das mit der Kugelstange (2) verbundene Teil (30) ist mit einem weiteren, die Gelenkpfanne vervollständigenden Teil (31) verschraubt. Jeder der beiden die Gelenkpfanne ausbildenden Teile (30, 31) erstreckt sich über eine Teiloberfläche des kugeligen Gelenkkopfes, die jeweils für sich nicht ausreichend ist, um den Gelenkkopf mit einem der Teile (30,31) allein unverlierbar zu umgreifen. Erst die beiden mittels der Verschraubung (32) verbundenen Teile (30, 31) bilden gemeinsam die den Gelenkkopf umgreifende Gelenkpfanne.

### Bezugszeichenliste:

| **Nr.** | **Bezeichnung** | **Nr.** | **Bezeichnung** |
|---|---|---|---|
| 1. | Anhängekupplung | 17. | Längsachse |
| 2. | Kugelstange | 18. | stirnseitiges Ende |
| 3. | Kupplungskugel | 19. | Druckfeder |
| 4. | Kuqelstangenlagerkopf | 20. | Verriegelungsstellung |
| 5. | gegenüberliegendes Bauteil | 21. | Freigabestellung |
| 6. | Hohlwelle | 22 | radiale Durchgänge |
| 7. | Höhlung | 23. | Kugeln |
| 8. | Abschnitt Höhlung | 24 | Kalotten |
| 9. | Abschnitt Höhlung | 25. | federbelastete Stifte |
| 10. | Abschnitt Höhlung | 26. | Bahnsteuerung |
| 11. | zylindrischer Abschnitt | 27. | Radialnut |
| 12. | zylindrischer Abschnitt | 28. | Kugel |
| 13. | teilkonischer Abschnitt | 29. | - |
| 14. | konischer Abschnitt | 30. | Teil |
| 15. | konischer Abschnitt | 31. | Teil |
| 16. | Sperrbolzen | 32. | Verschraubung |
| | | 33. | Betätigungsorgan |
| | | 34. | Stützscheibe |
| | | 35. | Sicherungsring |
| | | 36. | Zahnstange |
| | | 37. | Zahnrad |

## Patentansprüche

1. Anhängekupplung (1) für Kraftfahrzeuge umfassend eine fahrzeugfest angeordnete schwenkbar gelagerte Kugelstange (11), die an ihrem freien Ende eine Kupplungskugel (3) trägt und zumindest in ihrer Betriebslage über in Eingriff bringbare Formschlusskonturen (23,24) eines Kugelstangenlagerkopfes (4) und andererseits eines diesem gegenüberliegenden Bauteiles (5) drehfest festlegbar ist, wobei der Kugelstangenlagerkopf (4) und das diesem gegenüberliegende Bauteil (5) den Gelenkkopf und die Gelenkpfanne eines Kugelgelenkes bilden und zwischen Gelenkkopf und Gelenkpfanne eine Bahnsteuerung des Kugelstangenlagerkopfes (4) angeordnet ist, die beim Schwenken der Kügelstange(1) von der Betriebslage in die Ruhelage eine Veränderung der Lage der Schwenkachse bewirkt, wobei an dem Gelenkkopf des Kugelgelenks ein Hohlbauteil (6) ansetzt, dessen Höhlung (7) sich bis in den Gelenkkopf des Kugelgelenks erstreckt, dadurch gekenntzeichnet, dass in der Höhlung (7) eine axial unmittelbar auf die Formschlusskonturen (23,24) wirkende Verriegelung (16) zum in Eingriff bringen der Formschlusskonturen (23,24) angeordnet ist und dass in der Gelenkpfanne Mittel (25) zum außer Eingriff bringen der Formschlusskonturen (23,24) angeordnet sind.

2. Anhängekupplung nach Anspruch 1, **dadurch gekennzeichnet, dass** der Kugelstangenlagerkopf (4) die Gelenkpfanne und das diesem gegenüberliegende Bauteil (5) den Gelenkkopf des Kugelgelenks bilden.

3. Anhängekupplung nach Anspruch 1, **dadurch gekennzeichnet, dass** der Kugelstangenlagerkopf (4) den Gelenkkopf und das diesem gegenüberliegende Bauteil (5) die Gelenkpfanne des Kugelgelenks bilden.

4. Anhängekupplung nach Anspruch 2, **dadurch gekennzeichnet, dass** an dem Gelenkkopf des Kugelgelenks eine Hohlwelle (6) ansetzt, deren Höhlung (7) sich bis in den Gelenkkopf des Kugelgelenks erstreckt, wobei in der Höhlung (7) die axial wirkende Verriegelung (16) zum in Eingriff bringen der Formschlusskonturen (23,24) zumindest in der Betriebslage angeordnet ist.

5. Anhängekupplung nach Anspruch 3, **dadurch gekennzeichnet, dass** an dem Gelenkkopf des Kugelgelenks eine Kugelstange (2) mit der Höhlung ansetzt, die sich bis in den Gelenkkopf des Kugelgelenks erstreckt, wobei in der Höhlung die axial wirkende Verriegelung zum in Eingriff bringen der Formschlusskonturen zumindest in der Betriebslage angeordnet ist.

6. Anhängekupplung nach Anspruch 4 oder 5, **dadurch gekennzeichnet, dass** die Verriegelung einen in der Höhlung (7) geführten, gegen ein anstehendes Kraftelement (19) über ein von außen betätigbares Betätigungsorgan zurückstellbaren Sperrbolzen (16) umfasst, der mit in radial verlaufenden Durchgängen (22) des Gelenkkopfs angeordneten, in Kalotten (24) ein- und ausrückbaren Kugeln (23) zusammenwirkt, wobei die Kalotten (24) in der Gelenkpfanne angeordnet sind.

7. Anhängekupplung nach einem der Ansprüche 1 bis 6, **dadurch gekennzeichnet, dass** das Mittel (25) zum außer Eingriff bringen der Formschlusskonturen einen federbelasteten Stift umfasst, der in der Kalottenfläche austritt und in Richtung des radialen Durchgangs (22) in dem Gelenkkopf auf die Kugel (23) wirkt.

8. Anhängekupplung nach einem der Ansprüche 1 bis 7, **dadurch gekennzeichnet, dass** die Bahnsteuerung (26) als Kulisse mit mindestens einem darin eingreifenden Folgemittel (28) ausgebildet ist.

9. Anhängekupplung nach Anspruch 8, **dadurch gekennzeichnet, dass** die Kulisse als eine Radialnut (27) in dem Gelenkkopf mit einem vorzugsweise auf der einen Gelenkkopfhälfte zu der anderen Gelenkkopfhälfte entgegengerichtetem Verlauf der Radialnut ausgebildet ist.

10. Anhängekupplung nach Anspruch 9, **dadurch gekennzeichnet, dass** jedes Folgemittel eine in einem Sackloch der Gelenkpfanne angeordnete Kugel (28) ist, die in Richtung der im Querschnitt kreisabschnittsförmigen Radialnut (27) federbelastet ist.

11. Anhängekupplung nach einem der Ansprüche 8 - 10, **dadurch gekennzeichnet, dass** die Kulisse mindestens zwei Anschläge für die Folgemittel aufweist, die eine Weiterbewegung des Kugelstangenlagerkopfes in der Betriebs- und Ruhelage der Kugelstange unterbinden.

12. Anhängekupplung nach einem der Ansprüche 6 bis 11, **dadurch gekennzeichnet, dass** die Kugeln (23) exzentrisch in die Kalotten (24) in Eingriff bringbar sind.

## Claims

1. Trailer coupling (1) for motor vehicles, comprising a pivotably mounted ball head (11), disposed fixedly on the vehicle, which bears a coupling ball (3) at its free end and both in its rest position and its operating position can be fixed in a torque-proof manner by means of positive contours (23, 24) of a ball neck bearing head (4) and on the other hand of a component (5) located opposite thereto, which can be brought into engagement, wherein the ball neck bearing head (4) and the component (5) located opposite thereto form the joint head and the joint socket of a ball joint, and a track control of the ball neck bearing head (4) is disposed between joint head and joint socket, which brings about a change in the position of the pivot axis upon pivoting of the ball head (1) from the operating position into the rest position, wherein a hollow component (6) sits on the joint head of the ball joint, the cavity (7) whereof extends into the joint head of the ball joint, **characterised in that** a lock (16) acting axially directly on the positive contours (23, 24) for bringing into engagement said positive contours (23, 24) is disposed in the cavity (7) and that means (25) for bringing out of engagement said positive contours (23, 24) are disposed in the joint socket.

2. The trailer coupling according to claim 1, **characterised in that** ball neck bearing head (4) forms the joint socket and the component (5) opposite thereto forms the joint head of the ball joint.

3. The trailer coupling according to claim 1, **characterised in that** the ball neck bearing head (≤) forms the joint head and the component (5) opposite thereto forms the joint socket of the ball joint.

4. The trailer coupling according to claim 2, **characterised in that** a hollow shaft (6) sits on the joint head of the ball joint, the cavity (7) whereof extends into the joint head of the ball joint, wherein the axially acting lock (16) for bringing into engagement said positive contours (23, 24) at least in the operating position is disposed in the cavity (7).

5. The trailer coupling according to claim 3, **characterised in that** a ball head (2) with the cavity sits on the joint head of the ball joint, which cavity expends into the joint head of the ball joint, wherein the axially acting lock (16) for bringing into engagement said positive contours at least in the operating position is disposed in the cavity.

6. The trailer coupling according to claim 4 or 5, **characterised in that** the lock comprises a locking pin (16) guided in the cavity (7), which can be reset against a pending force element (19) by means of an externally actuatable actuating member, which cooperates with balls (23) disposed in radially running passages (22) of the joint head, which can be moved in and out in spherical indentations (24), wherein the spherical indentations (24) are disposed in the joint socket.

7. The trailer coupling according to any one of claims 1 to 6, **characterised in that** the means (25) for bringing out of engagement the positive contours comprise a spring-loaded pin which emerges in the ball indentation area and acts on the ball (23) in the direction of the radial passage (22) in the joint head.

8. The trailer coupling according to any one of claims 1 to 7, **characterised in that** the track control (26) is configured as a link having at least one following means (28) engaging therein.

9. The trailer coupling according to claim 8, **characterised in that** the link is configured as a radial groove (27) in the joint head with a course of the radial groove on one joint head half preferably in the opposite direction to the other joint head half.

10. The trailer coupling according to claim 9, **characterised in that** each following means is a ball (28) disposed in a blind hole of the joint socket which is spring-loaded in the direction of the radial groove (27) which is circular-segment shaped in cross-section.

11. The trailer coupling according to any one of claims 8-10, **characterised in that** the link has at least two stops for the following means which prevent any further movement of the ball neck bearing head in the operating and rest position of the ball head.

12. The trailer coupling according to any one of claims 6 to 11, **characterised in that** the balls (23) can be brought into engagement eccentrically in the links (24).

## Revendications

1. Accouplement d'attelage (1) pour des véhicules comprenant une barre à boule (11) disposée de façon fixe sur le véhicule et montée de façon pivotante, qui porte une boule d'accouplement (3) sur son extrémité libre et peut être fixée de façon résistante à la torsion au moins dans sa position de service au moyen de contours à complémentarité de formes (23, 24), pouvant être mis en prise, d'une tête de palier de barre à boule (4) et d'autre part d'un élément de construction (5) faisant face à cette tête, la tête de palier de barre à boule (4) et l'élément de construction (5) faisant face à celle-ci formant la tête d'articulation et le coussinet à rotule d'une articulation sphérique et une commande de trajectoire de la tête de palier de barre à boule (4) étant disposée entre la tête d'articulation et le coussinet à rotule, laquelle commande entraîne une variation de la position de l'axe de pivotement lors du basculement de la barre à boule (1) de la position de service dans la position de repos, un élément de construction creux (6) se plaçant sur la tête articulée de l'articulation sphérique, élément de construction dont la cavité (7) s'étend jusque dans la tête articulée de l'articulation sphérique, **caractérisé en ce qu'**un verrouillage (16) agissant axialement directement sur les contours à complémentarité de formes (23, 24) est disposé dans la cavité (7) pour la mise en prise des contours à complémentarité de formes (23, 24) et **en ce que** des moyens (25) sont disposés dans le coussinet à rotule pour la mise hors prise des contours à complémentarité de formes (23, 24).

2. Accouplement d'attelage selon la revendication 1, **caractérisé en ce que** la tête de palier de barre à boule (4) forme le coussinet à rotule et l'élément de construction (5) opposé à cette tête forme la tête articulée de l'articulation sphérique.

3. Accouplement d'attelage selon la revendication 1, **caractérisé en ce que** la tête de palier de barre à boule (4) forme la tête articulée et l'élément de construction (5) opposé à cette tête le coussinet à rotule de l'articulation sphérique.

4. Accouplement d'attelage selon la revendication 2, **caractérisé en ce qu'**un arbre creux (6), dont la cavité (7) s'étend jusque dans la tête articulée de l'articulation sphérique, se place sur la tête articulée de l'articulation sphérique, le verrouillage (16) agissant axialement étant disposé dans la cavité (7) pour la mise en prise des contours à complémentarité de formes (23, 24) au moins dans la position de service.

5. Accouplement d'attelage selon la revendication 3, **caractérisé en ce qu'**une barre à boule (2) se place avec la cavité sur la tête articulée de l'articulation sphérique, laquelle cavité s'étend jusque dans la tête articulée de l'articulation sphérique, le verrouillage agissant axialement étant disposé dans la cavité pour la mise en prise des contours à complémentarité de formes au moins dans la position de service.

6. Accouplement d'attelage selon la revendication 4 ou 5, **caractérisé en ce que** le verrouillage comprend un boulon de blocage (16) guidé dans la cavité (7) et pouvant être reculé contre un élément de force (19) appliqué au moyen d'un organe de commande pouvant être actionné par l'extérieur, lequel boulon agit conjointement avec des boules (23) disposées dans des passages (22) agencés radialement de la tête articulée et pouvant s'enclencher et se désenclencher dans des calottes (24), les calottes (24) étant disposées dans le coussinet à rotule.

7. Accouplement d'attelage selon l'une des revendications 1 à 6, **caractérisé en ce que** le moyen (25) pour la mise hors prise des contours à complémentarité de formes comprend une broche sollicitée par ressort, qui sort dans la surface de calotte et agit en direction du passage radial (22) dans la tête articulée sur la boule (23).

8. Accouplement d'attelage selon l'une des revendications 1 à 7, **caractérisé en ce que** la commande de trajectoire (26) est conçue comme coulisse avec au moins un moyen asservi (28) s'engageant à l'intérieur.

9. Accouplement d'attelage selon la revendication 8, **caractérisé en ce que** la coulisse est conçue sous forme d'une rainure radiale (27) dans la tête articulée avec un tracé de la rainure radiale, orienté de préférence dans le sens contraire sur l'une des moitiés de tête articulée par rapport à l'autre moitié de cette tête.

10. Accouplement d'attelage selon la revendication 9, **caractérisé en ce que** chaque moyen asservi est une boule (28) disposée dans un trou borgne du coussinet à rotule, qui est sollicitée par ressort en direction de la rainure radiale (27) en forme de partie circulaire en section.

11. Accouplement d'attelage selon l'une des revendications 8 à 10, **caractérisé en ce que** la coulisse présente au moins deux butées pour les moyens asservis, qui empêchent un déplacement ultérieur de la tête de palier de barre à boule dans la position de service et la position de repos de la barre à boule.

12. Accouplement d'attelage selon l'une des revendications 6 à 11, **caractérisé en ce que** les boules (23) peuvent être mises en prise de façon excentrée dans les calottes (24).
